# EUROPÄISCHE PATENTSCHRIFT

(11) **EP 0 993 990 B1**
(45) Veröffentlichungstag und Bekanntmachung des Hinweises auf die Patenterteilung: **12.10.2005**
(21) Anmeldenummer: 99114826.3
(22) Anmeldetag: 29.07.1999
(51) Int. Cl.: B60Q 1/48

(54) **Einparkhilfesystem**
Parking-aid system
Système d'aide pour se garer

(30) Priorität: 13.10.1998 DE 19847013
(43) Veröffentlichungstag der Anmeldung: 19.04.2000
(73) Patentinhaber: ROBERT BOSCH GMBH, 70442 Stuttgart (DE)
(72) Erfinder: Winner, Hermann, 76229 Karlsruhe (DE); Noll, Martin, 76461 Muggensturm (DE); Schmid, Dirk, 71272 Renningen (DE)

(56) Entgegenhaltungen:
- EP-A- 0 872 741
- WO-A-98/00730
- DE-A- 2 642 211
- DE-A- 2 835 867
- GB-A- 2 260 209
- US-A- 4 208 658
- US-A- 5 777 563
- PATENT ABSTRACTS OF JAPAN vol. 1995, no. 06, 31. Juli 1995 (1995-07-31) & JP 07 057198 A (FUJITSU TEN LTD), 3. März 1995 (1995-03-03)

## Beschreibung

Die Erfindung betrifft ein Einparkhilfesystem mit den im Oberbegriff des Anspruchs 1 genannten Merkmalen.

### Stand der Technik

Einparkhilfesysteme der gattungsgemäßen Art sind bekannt. Ein Beispiel für ein solches System ist das Parkpilot-System der Anmelderin. Eine wesentliche Anwendung solcher Systeme ist, dem Fahrer des Fahrzeugs das Rangieren in unübersichtlichen und beengten Verkehrsverhältnissen, insbesondere das Einparken, zu erleichtern, indem dieser vor Hindernissen gewarnt wird, die in seiner Fahrtrichtung liegen und deren Entfernung vom Fahrzeug kleiner als ein vorgegebener Grenzabstand ist. Solche Hindernisse können zum Beispiel niedrige Straßenbegrenzungsmarkierungen oder herumliegende Gegenstände sein, die vom Fahrersitz eines Fahrzeugs aus nicht mehr sichtbar sind, weil sie sich zu nahe am Fahrzeug befinden, oder auch bewegte Hindernisse, die außerhalb der Blickrichtung des Fahrers neu auftauchen, wie z.B. andere Verkehrsteilnehmer, Tiere etc.

Das bekannte Parkpilot-System erfaßt den Abstand eines solchen Hindernisses von einer Begrenzungskante des Fahrzeugs und erzeugt ein optisches oder akustisches Warnsignal, wenn die Unterschreitung eines ersten Grenzabstandes erfaßt wird. Bei Unterschreitung weiterer Grenzabstände ändert das Warnsignal jeweils seine Form, so daß der Fahrer anhand der Form des Warnsignals das Ausmaß der Zusammenstoßgefahr beurteilen und das Fahrzeug entsprechend steuern kann.

Dieses System ermöglicht es einem vorsichtigen Fahrer, in einer schwierigen Verkehrssituation wie etwa dem Einparken in eine enge Lücke, Zusammenstöße zuverlässig zu vermeiden. Nachteilig bei einem solchen System ist jedoch, daß ein Fahrer, der nicht mit der Möglichkeit eines Hindernisses rechnet und deshalb mit relativ hoher Geschwindigkeit rückwärts fährt, nicht mehr in der Lage ist, das Fahrzeug zum Stehen zu bringen, wenn er das Warnsignal wahrnimmt.

Die herkömmlichen Einparkhilfesysteme können dieser Gefahr nur dadurch Rechnung tragen, daß der Grenzabstand unterhalb von dem ein Warnsignal erzeugt wird, heraufgesetzt wird. Dies zu tun ist jedoch nicht zweckmäßig, weil jede Vergrößerung des Grenzabstandes die Gefahr von grundlosen Warnungen erhöht. Wenn deren Zahl zu groß ist, wird ein Fahrer das Warnsignal ignorieren, so daß das gesamte System sinnlos wird. Außerdem ist es auch nicht zweckmäßig, den Grenzabstand so weit herauf zusetzen, daß er innerhalb des Bereichs liegt, den der Fahrer aus seiner Position im Fahrzeug heraus noch sicher würdigen kann.

Aus Lerner et al., Driver Backing Behaviour Research: Implications for Backup Warning Devices, Transportation Research Board 76th Annual Meeting, Januar 1997, Washington D.C. ist ein System bekannt, das den Fahrer eines rückwärts fahrenden Fahrzeugs warnt, wenn die von dem System berechnete voraussichtliche verbleibende Zeit bis zum Erreichen eines Hindernisses kleiner ist als ein Zeitgrenzwert von 1,5 bis 2 Sekunden. Bei diesem System besteht das Problem, daß die Fahrgeschwindigkeit mit hoher Genauigkeit gemessen werden muß, um insbesondere beim Fahren mit niedriger Geschwindigkeit, die für einen Einpark- oder Rangiervorgang typisch ist, einen aussagekräftigen Vorhersagewert für die bis zum Zusammenstoß mit einem Hindernis verbleibende Restzeit zu gewinnen. Je geringer die Fahrgeschwindigkeit ist, desto kürzer sind die pro Zeiteinheit zurückgelegten Strecken, und dementsprechend größer ist der relative Messfehler bei der Ermittlung der Geschwindigkeit. Wenn das Fahrzeug zum Stehen kommt, geht die Restzeit gegen Unendlich, so dass keinerlei Warnung erfolgt. Das Warnsystem nach Lerner ist deshalb zur Unterstützung bei Einparkvorgängen schlecht geeignet.

Eine Vorrichtung und ein Verfahren zum Erfassen von Hindernissen in der Fahrzeugumgebung ist aus der US 5,777,563 bekannt. Ein Radarsignal wird ausgesendet, von einem Hindernis reflektiert und wieder empfangen. Hieraus wird der Abstand zu dem Hindernis bestimmt. Es sind verschiedene Warnungen vorgesehen, die in Abhängigkeit von dem Unterschreiten bestimmter Abstandsgrenzwerte ausgegeben werden. Diese Abstandsgrenzwerte sind von der Fahrzeuggeschwindigkeit abhängig.

### Vorteile der Erfindung

Das erfindungsgemäße Einparkhilfesystem mit den im Anspruch 1 genanten Merkmalen hat demgegenüber den Vorteil, dass es die Möglichkeit schafft, an den jeweiligen Bewegungszustand des Fahrzeugs angepasst den Fahrer rechtzeitig vor der Gefahr eines Zusammenstoßes zu warnen, ohne dass deshalb die Zahl der grundlosen Warnungen merklich erhöht wird.

Indem die Auswerteeinheit den Abstandsgrenzwert in Abhängigkeit vom Bewegungszustand des Fahrzeugs dynamisch festlegt, verschafft sie dem Fahrer auch bei einer höheren Geschwindigkeit die Reaktionszeit, die notwendig ist, um das Fahrzeug zuverlässig vor dem Hindernis zum Stehen zu bringen. Indem sie als Grenzwertkriterium nicht eine Zeit, sondern einen Abstand verwendet, vermeidet sie die Probleme, die beim System nach Lerner bei niedrigen Geschwindigkeiten auftreten, und sie ermöglicht, dass das Einparkhilfesystem auch bei stehendem Fahrzeug dem Fahrer eine nutzbare Information liefert.

Um dem Fahrer möglichst umfassende Informationen zu liefern, ist vorgesehen, daß die Auswerteeinheit das Abstandssignal mit einer Mehrzahl von Abstandsgrenzwerten vergleicht und der Warnsignalgeber eine unter mehreren unterscheidbaren Formen des Warnsignals erzeugt, je nachdem, welches der kleinste unterschrittene Abstandsgrenzwert ist. So liefert das Einparkhilfesystem dem Fahrer bei fortschreitender Annäherung an ein Hindernis eine Folge von unterscheidbaren Warnsignalen, die ihm einen quantitativen Eindruck vom Ausmaß einer Zusammenstoßgefahr liefern.

Bei stehendem Fahrzeug haben die vorgegebenen Funktionen der Abstandsgrenzwerte vorzugsweise Werte unterhalb 1,5 Meter.

Eine zur Bewertung des Bewegungszustands des Fahrzeugs benötigte Geschwindigkeitsinformation kann die Auswerteeinheit aus einem für die Eigengeschwindigkeit des Fahrzeugs repräsentativen Signal gewinnen. Hierfür kann z. B. ein Signal herangezogen werden, das mit Hilfe von Raddrehzahlsensoren oder mit die Fahrbahn abtastenden optischen, Radar- oder Ultraschallmeßverfahren gewonnen wird. Wichtig ist, daß das Meßverfahren eine gute Auflösung insbesondere im unteren Geschwindigkeitsbereich liefert.

Alternativ kann die Auswerteeinheit so ausgebildet sein, daß sie in der Lage ist, die zeitliche Änderung des Abstandssignals und somit die Relativgeschwindigkeit des Fahrzeugs im Bezug auf das Hindernis zu ermitteln und anhand dieser Information den oder die Abstandsgrenzwerte festzulegen.

Die Berücksichtigung der Eigengeschwindigkeit oder der Relativgeschwindigkeit des Fahrzeugs bei der Festlegung der Abstandsgrenzwerte kann erfolgen, indem zu einem geschwindigkeitsunabhängigen Abstandswert ein zur Geschwindigkeit linear proportionaler Term addiert wird.

Die Proportionalitätskonstante des geschwindigkeitsproportionalen Terms ist zweckmäßigerweise eine fest vorgegebene Zeit und sollte keine der nachfolgenden Zeiten unterschreiten:
a) die Reaktionszeit des Fahrers (hier kann ein Durchschnittswert zwischen ca. 0,2-0,6 sec. angenommen werden),
b) die Reaktionszeit der Meßeinrichtung,
c) die Totzeit des Bremssystems und
d) die zum Abbremsen des Fahrzeugs in den Stand erforderliche Zeit.

Da die Bremsverzögerung eines Fahrzeugs auch von außerhalb des Fahrzeugs liegenden Faktoren wie etwa den Untergrundverhältnissen abhängt, kann die zum Abbremsen erforderliche Zeit nur unter Zugrundelegung eines Schätzwerts für die Bremsverzögerung grob ermittelt werden. Ein tauglicher Schätzwert für gegenwärtige Bremssysteme ist ca. 5 m/s².

Die mit dem Einparkhilfesystem erreichbare Sicherheit ist erhöht, wenn der Zeitabstand nicht kleiner als die Summe von zwei, drei vorzugsweise allen oben genannten Zeitdauern ist.

Andererseits ist es nicht zweckmäßig, wenn der Zeitabstand wesentlich größer als die Summe der genannten Zeitdauern ist, da andernfalls die Gefahr besteht, daß das System ein Warnsignal bereits bei einem großen Abstand des Fahrzeugs vom Hindernis erzeugt, der Fahrer das Fahrzeug in einem "sicheren" Abstand vom Hindernis zum Stehen bringt, zu dem Schluß kommt, daß die Warnung überflüssig war und entsprechende Warnungen in Zukunft ignoriert.

Wenn ein Fahrer infolge eines Warnsignals sein Fahrzeug abbremst, kann sich dadurch der dem Warnsignal zugeordnete Abstandsgrenzwert so weit verringern, daß er kleiner wird als der Abstand zu dem Hindernis, das Auslöser des Warnsignals war. Wenn in einer solchen Situation das Warnsignal abgebrochen oder geändert wird, besteht die Gefahr, daß der Fahrer das Hindernis für beseitigt hält und deshalb falsch reagiert. Um dieses Risiko auszuräumen, schaltet die Auswerteeinheit den Warnsignalgeber nur dann von einer Form des Warnsignals, die einem kleinen Abstandsgrenzwert entspricht,auf eine einem größeren Abstandsgrenzwert entsprechende Form um bzw. schaltet den Alarmsignalgeber nur dann aus, wenn eine Zunahme des momentanen Abstands zum Hindernis gemessen wird, Fahrzeug und Hindernis sich also tatsächlich voneinander entfernen.

Erfindungsgemäß ist vorgesehen, daß der Alarmsignalgeber eine weitere unterscheidbare Form des Warnsignals erzeugt, wenn ein anhand der Eigengeschwindigkeit festgelegter Abstandsgrenzwert größer als die Reichweite der Meßeinrichtung ist, d. h. wenn das Fahrzeug so schnell fährt, daß eine effektive Warnung durch das Einparkhilfesystem nicht möglich ist.

Das Einparkhilfesystem wird vorzugsweise beim Rückwärtsfahren eingesetzt, um den Abstand zu hinter dem Fahrzeug liegenden Hindernissen zu messen. Zu diesem Zweck kann die Meßeinrichtung eine Mehrzahl von Abstandsensoren umfassen, die im hinteren Stoßfänger angeordnet sind.

### Zeichnungen

Die Erfindung wird nachfolgend anhand von Ausführungsbeispielen mit Bezug auf die beigefügten Zeichnungen näher erläutert. Es zeigen:
Fig. 1 eine schematische Darstellung eines erfindungsgemäßen Einparkhilfesystems,
Fig. 2 ein Flußdiagramm, das die Arbeitsweise eines erfindungsgemäßen Einparkhilfesystems veranschaulicht,
Fig. 3 das Verhalten eines Einparkhilfesystems gemäß einer ersten Ausgestaltung der Erfindung,
Fig. 4 das Verhalten eines Einparkhilfesystems gemäß einer zweiten Ausgestaltung der Erfindung,
Fig. 5 das Verhalten eines herkömmlichen Einparkhilfesystems.

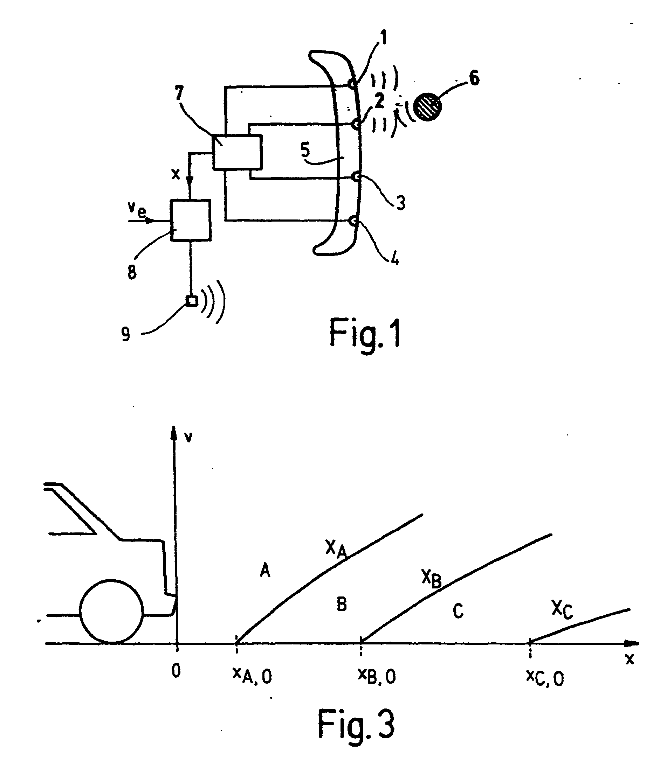

Fig. 1 zeigt stark schematisiert den Aufbau des erfindungsgemäßen Einparkhilfesystems. Es umfaßt eine Mehrzahl von Abstandssensoren 1, 2, 3, 4 in Form von Ultraschall-Sende-Empfängern, die im hinteren Stoßfänger 5 eines Kraftfahrzeugs angeordnet sind und von dort Ultraschallpulse vom Fahrzeug aus gesehen nach hinten abstrahlen. Ein hinter dem Fahrzeug liegendes Hindernis 6, z. B. ein Zaunpfosten, reflektiert einen Teil der Ultraschallenergie zurück in Richtung auf die Sensoren 1-4. Diese registrieren das eintreffende Echo und leiten es an eine Verarbeitungsschaltung 7 weiter. Diese bestimmt anhand des Zeitabstands zwischen dem von jedem Sensor 1-4 abgegebenen Puls und dem aufgefangenen Echo den Abstand des Stoßfängers 5 vom Hindernis und gibt das Ergebnis in Form eines Abstandssignals x an eine Auswerteeinheit 8 weiter. Die Auswerteeinheit empfängt ferner ein Signal vₑ, das die Eigengeschwindigkeit des Fahrzeugs angibt, von Raddrehzahlaufnehmern, die an jedem Rad des Fahrzeugs vorgesehen sind und deren Ausgangssignale gleichzeitig zum Betreiben eines Bremskraftregelsystems benutzt werden.

Anhand des Signals vₑ legt die Auswerteeinheit 8 eine Mehrzahl von Abstandsgrenzwerten fest. Wenn die abgeschätzte Gefahr den ersten, niedrigsten Grenzwert überschreitet, steuert die Auswerteeinheit einen Warnsignalgeber 9 an, so daß dieser eine erste Form eines Warnsignals ausgibt, um dem Fahrer eine geringe Gefahr zu signalisieren. Bei Überschreitung jedes weiteren Grenzwertes wird der Warnsignalgeber 9 angesteuert, um eine andere Form von Warnsignal auszugeben, die dem Fahrer schrittweise zunehmend eine höhere Gefahr signalisiert.

Der Warnsignalgeber kann ein optischer Signalgeber sein, z. B. ein Anzeigefeld auf dem Armaturenbrett, dessen Farbe sich mit Überschreitung jedes Grenzwertes ändert, z. B. Grün für keine Gefahr, Gelb für mittlere und rot für hohe Gefahr. Eine andere Möglichkeit ist ein in der Fahrgastzelle angeordnetes Blinklicht, dessen Blinkfrequenz mit zunehmender Gefahr heraufgesetzt wird. Der Warnsignalgeber 9 kann auch ein akustischer Warnsignalgeber sein, z. B. ein Summer oder ein Lautsprecher, der je nach Gefahrenlage mit unterschiedlicher Frequenz, Lautstärke oder Tonhöhe betrieben wird.

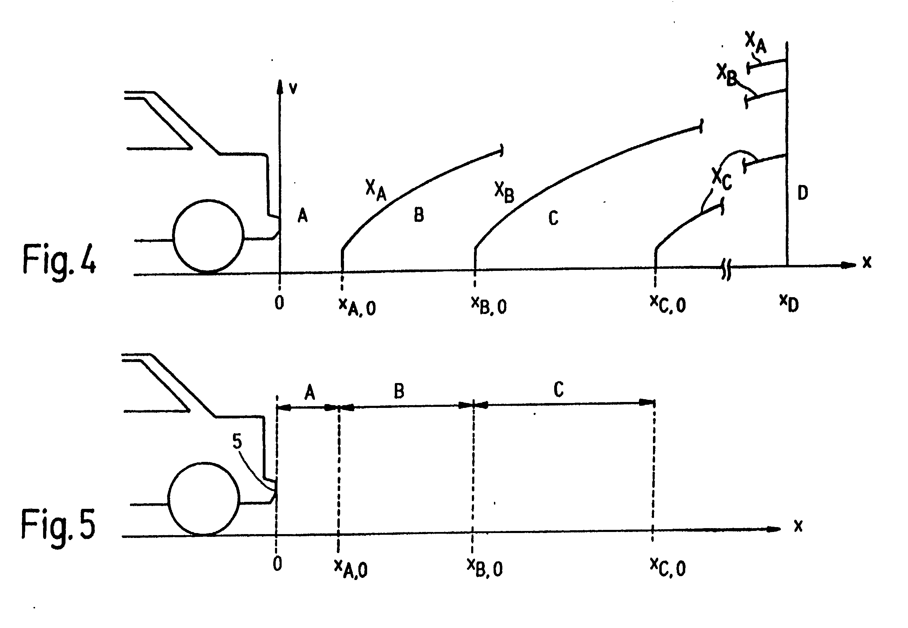

Zur Verdeutlichung der Funktionsweise der Erfindung wird zunächst anhand von Figur 5 auf die Arbeitsweise eines herkömmlichen Einparkhilfesystems eingegangen. Die Figur zeigt die Heckpartie eines Kraftfahrzeugs mit im Stoßfänger 5 eingelassenen Entfernungssensoren. Diese messen den Abstand eines Hindernisses vom Fahrzeug, und je nachdem, ob sich ein Hindernis in einem der drei Gefahrenbereiche A, B und C befindet, die jeweils Abständen zwischen 0 und x_{A,O}, x_{A,O} und x_{B,O} bzw. x_{B,O} und x_{C,O} entsprechen, wird ein Warnsignal in einer diesem Abschnitt entsprechenden Form ausgegeben. Wird kein Hindernis erfaßt, oder ist der Abstand eines erfaßten Hindernisses größer als x_{C,O} , wird kein Warnsignal erzeugt. Bei einem Einparkhilfesystem dieser Art kann es vorkommen, daß bei schneller Rückwärtsfahrt ein Hindernis in den Bereich C eindringt und ein Warnsignal auslöst; bevor aber der Fahrer reagieren und das Fahrzeug zum Stehen bringen kann, ist es bereits mit dem Hindernis zusammengestoßen.

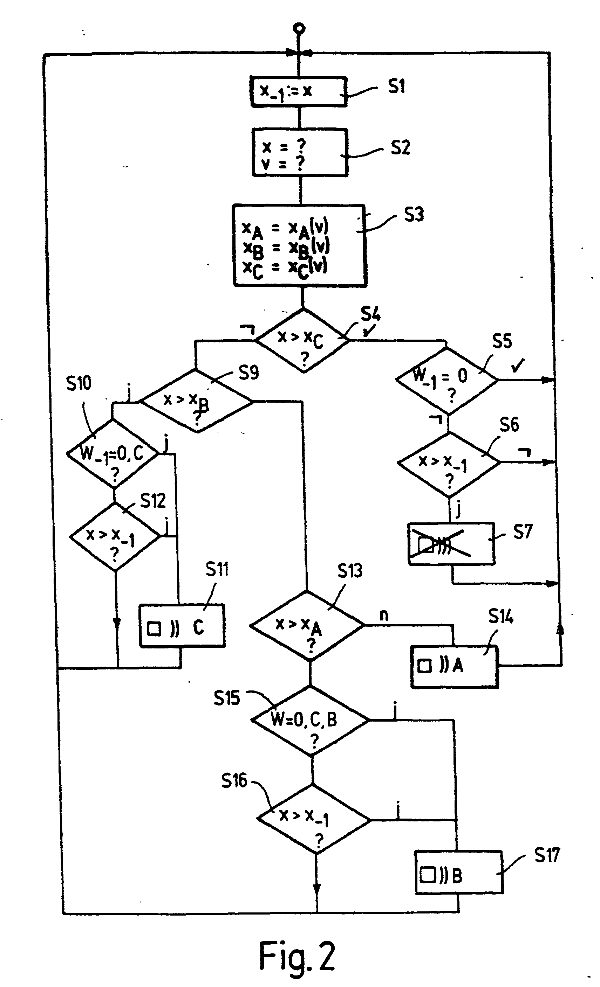

Figur 2 zeigt die Arbeitsweise des erfindungsgemäßen Systems anhand eines Flußdiagramms. Das in diesem Flußdiagramm dargestellte Verfahren wird in kurzen Zeitabständen wiederholt, so daß der Fahrer mit möglichst geringer Verzögerung vor auftretenden Hindernissen gewarnt wird. In einem Schritt S1 wird zunächst der bei der vorherigen Durchführung des Verfahrens erhaltene Meßwert x für die Entfernung zu einem Hindernis als Wert x₋₁ abgespeichert, und der aktuell geltende Warnzustand - keine Warnung oder Warnsignal in Form A, B, C - wird gespeichert. In Schritt S2 erfaßt die Auswerteeinheit die aktuelle Entfernung x des Fahrzeugs zum Hindernis und die Geschwindigkeit v des Fahrzeugs. Diese Geschwindigkeit kann eine mit Bezug auf die Fahrbahn gemessene Eigengeschwindigkeit oder eine mit Bezug auf das Hindernis gemessene Relativgeschwindigkeit des Fahrzeugs sein. Anhand der Geschwindigkeit v legt die Auswerteeinheit in Schritt S3 Abstandsgrenzwerte x_{A}, x_{B}, x_{C} fest, mit denen der Abstand zwischen Fahrzeug und Hindernis verglichen werden soll. Abstandsgrenzwerte können z. B. nach der Formel xᵢ = x_{i,O} + vt, i = A, B, C festgelegt werden, wobei t die Summe der Reaktionszeit des Fahrers, der Reaktionszeit der Meßeinrichtung, die durch die Ultraschallsensoren 1 bis 4 und die Verarbeitungsschaltung 7 gebildet ist, der Totzeit des Bremssystems, die zwischen dem Treten auf das Bremspedal und dem Einsetzen der Bremswirkung verstreicht und der zum Abbremsen des Fahrzeugs in den Stand erforderlichen Zeit ist. Für die Abbremszeit kann ein fester Schätzwert verwendet werden, sie kann auch in Abhängigkeit von der Eigengeschwindigkeit des Fahrzeugs unter Zugrundelegung eines typischen Werts von 5 m/s² der Bremsverzögerung exakt berechnet werden.

Anschließend wird der Abstand x des Fahrzeugs vom Hindernis mit den festgelegten Abstandsgrenzwerten verglichen. Stellt sich in Schritt S4 heraus, daß der Abstand x größer als der größte Grenzwert x_{c} ist, wird in S5 überprüft, ob der abgespeicherte Warnzustand (in der Figur als "W₋₁" bezeichnet) "aus" ist. Wenn ja, kehrt das Verfahren zu S1 zurück. Wenn nein, wird in S6 noch überprüft, wie der Abstand zum Hindernis sich entwickelt hat. Wenn er zugenommen hat, wird das Warnsignal, sofern es eingeschaltet war, ausgeschaltet (S7), andernfalls kehrt das Verfahren direkt zu S1 zurück. Ein bereits zuvor eingeschaltetes Warnsignal bleibt so bestehen, bis Fahrzeug und Hindernis sich voneinander entfernen.

Wenn x kleiner als x_{C} ist, wird in S9 mit x_{B} verglichen. Wenn x größer als x_{B} ist, wird in S10 überprüft, ob der aktuelle Warnzustand "aus" oder das Warnsignal in der Form C eingeschaltet ist. Wenn der Warnzustand "aus" ist, wird das Warnsignal der Form C in S11 eingeschaltet. Wenn nein, wird noch in S12 die Änderung der Entfernung zum Hindernis berücksichtigt. Nimmt sie ab, wird das Warnsignal der Form C eingeschaltet, sofern es nicht bereits eingeschaltet ist, andernfalls kehrt das Verfahren direkt zu S1 zurück, so daß ein in einem früheren Durchgang eingeschaltetes Signal der Form A oder B bestehen bleibt.

Wenn x kleiner als x_{B} ist, wird in S13 mit x_{A} verglichen. Ist x < x_{A}, so wird in jedem Fall das Warnsignal A eingeschaltet (S14), andernfalls erfolgt in den Schritten S15 bis S17 eine Überprüfung und Aktualisierung des geltenden Warnzustands, in analoger Weise wie oben für die Schritte S10 bis S12 beschrieben.

Figur 3 veranschaulicht das Ergebnis des mit Bezug auf Figur 2 beschriebenen Verfahrens in Form einer Art von Kennliniendiagramm. Die Abszisse des Diagramms gibt wie in Figur 4 den Abstand x zwischen dem Stoßfänger 5 des Fahrzeugs und einem Hindernis an. An der Ordinate ist die Geschwindigkeit (Eigengeschwindigkeit oder Relativgeschwindigkeit) des Fahrzeugs aufgetragen. Dem Diagramm kann für beliebige Kombinationen von Hindernisabstand und Fahrzeuggeschwindigkeit entnommen werden, welchem Warnbereich diese zugeordnet wird. Die Grenzen zwischen den Bereichen A, B und C bilden Parabelbögen x_{A}, x_{B}, x_{C}. Diese schneiden die Abszisse in den Punkten x_{A,O}, x_{B,O}, x_{C,O}, die den gleich bezeichneten Punkten in der Figur 4 entsprechen. Wenn die Geschwindigkeit des Fahrzeugs 0 ist, verhält sich das erfindungsgemäße System folglich so wie das herkömmliche System nach Figur 5. Mit zunehmender Fahrzeuggeschwindigkeit verbreitert sich jedoch der der höchsten Zusammenstoßgefahr entsprechende Bereich A, und die Bereiche B und C verschieben sich zu höheren Abständen. Diese Verschiebung spiegelt die Verlängerung des Bremswegs des Fahrzeugs mit zunehmender Geschwindigkeit wider.

Figur 4 zeigt ein entsprechendes Kennliniendiagramm für eine weitere Ausgestaltung des erfindungsgemäßen Einparkhilfesystems. Ein erster Unterschied zwischen diesem Diagramm und dem von Figur 3 ist, daß die Grenzkurven x_{A}, x_{B} und x_{C} bei niedrigerer Geschwindigkeit vertikal verlaufen. Dies ergibt sich daraus, daß bei der Abschätzung des zukünftigen Abstands beim Einparkhilfesystem gemäß dieser Ausgestaltung niedrige Geschwindigkeiten, die nur schwierig hinreichend genau zu messen sind, die aber auch zum Bremsweg nur wenig beitragen, kurzerhand vernachlässigt werden, um die Schaltungsstruktur einfach zu halten.

Ein weiterer, vom oben genannten unabhängiger Unterschied ist die Hinzufügung eines vierten Bereiches D. Die Reichweite der Sensoren 1-4, innerhalb derer eine genaue Entfernungsmessung möglich ist, ist begrenzt und wird mit x_{D} bezeichnet. Der Schnittpunkt der Kurve x_{A} mit der Linie x = x_{D} gibt die Grenzgeschwindigkeit an, oberhalb derer ein Abbremsen des Fahrzeugs innerhalb des Meßbereichs der Meßeinrichtung nicht mehr zuverlässig möglich ist. Wird diese Geschwindigkeit überschritten, so ist das Einparkhilfesystem nicht mehr wirksam. Von diesem Umstand wird der Fahrer durch eine Form von Warnsignal in Kenntnis gesetzt, die sich von den anderen Formen von Warnsignal deutlich unterscheidet. Wenn z. B. die den Bereichen A, B, C zugeordneten Signalformen akustische Pulssignale von unterschiedlicher Frequenz sind, so kann die dem D-Bereich zugeordnete Signalform ein Signal mit einer abweichenden Tonhöhe oder einem deutlich veränderten Tastverhältnis sein.

Die vorliegende Erfindung ist selbstverständlich nicht auf die Zahl von Warnsignalbereichen wie in den hier geschilderten Beispielen beschränkt. Es können auch 1, 2 oder mehr als 3 solcher Bereiche vorhanden sein, außerdem können die einzelnen Warnsignalformen mit Ausnahme der dem Bereich D zugeordneten Form kontinuierlich ineinander übergehen.

## Patentansprüche

1. Einparkhilfesystem für ein Fahrzeug, mit einer Messeinrichtung (1, 2, 3, 4, 7) zum Messen des momentanen Abstandes des Fahrzeugs von einem Hindernis, einer Auswerteeinheit (8), die ein von der Messeinrichtung (1, 2, 3, 4, 7) ausgegebenes Abstandssignal (x) mit einem Abstandsgrenzwert (x_{A}, x_{B}, x_{C}) vergleicht, und einem Warnsignalgeber (9), der ein für einen Fahrer des Fahrzeugs wahrnehmbares Warnsignal erzeugt, solange das Abstandssignal (x) den Abstandsgrenzwert unterschreitet, wobei die Auswerteeinheit (8) den Abstandsgrenzwert gemäß einer vorgegebenen Funktion eines Bewegungszustandes des Fahrzeugs dynamisch festlegt, **dadurch gekennzeichnet, dass** der Alarmsignalgeber eine weitere unterscheidbare Form des Warnsignals erzeugt, wenn ein festgelegter Abstandsgrenzwert größer als die Reichweite der Messeinrichtung (1, 2, 3, 4, 7) ist.

2. Einparkhilfesystem nach Anspruch 1, **dadurch gekennzeichnet, dass** die Auswerteeinheit (8) das Abstandssignal (x) mit einer Mehrzahl von Abstandsgrenzwerten (x_{A}, x_{B}, x_{C}) vergleicht und der Warnsignalgeber (9) eine unter mehreren unterscheidbaren Formen des Warnsignals erzeugt, je nachdem, welches der kleinste unterschrittene Abstandsgrenzwert ist.

3. Einparkhilfesystem nach Anspruch 1 oder 2, **dadurch gekennzeichnet, dass** die vorgegebenen Funktionen Werte unter 1, 5m haben, wenn die Geschwindigkeit des Fahrzeugs 0 ist.

4. Einparkhilfesystem nach einem der vorhergehenden Ansprüche, **dadurch gekennzeichnet, dass** die Auswerteeinheit ein für die Eigengeschwindigkeit des Fahrzeugs repräsentatives Signal (vₑ) empfängt.

5. Einparkhilfesystem nach einem der vorhergehenden Ansprüche, **dadurch gekennzeichnet, dass** die Auswerteeinheit (8) bei der Festlegung der Abstandsgrenzwerte zu einem geschwindigkeitsunabhängigen Abstandswert einen zur Geschwindigkeit linear proportionalen Term addiert.

6. Einparkhilfesystem nach Anspruch 5, **dadurch gekennzeichnet, dass** die Proportionalitätskonstante des proportionalen Terms eine Zeit ist, die nicht kleiner ist als eine der folgenden Zeiten ist, die nicht kleiner ist als eine der folgenden Zeiten oder die Summe mehrerer dieser Zeiten:
a) die Reaktionszeit des Fahrers,
b) die Reaktionszeit der Messeinrichtung,
c) die Totzeit des Bremssystems,
d) die zum Abbremsen des Fahrzeugs in den Stand erforderliche Zeit.

7. Einparkhilfesystem nach Anspruch 6, **dadurch gekennzeichnet, dass** die Proportionalitätskonstante nicht größer als die Summe der in Anspruch 6 aufgezählten Zeiten a bis d ist.

8. Einparkhilfesystem nach einem der vorhergehenden Ansprüche, **dadurch gekennzeichnet, dass** die Auswerteeinheit (8) den Alarmsignalgeber (9) nur dann von einem Warnsignal, das einem ersten Abstandsgrenzwert zugeordnet ist, auf ein einem höheren zweiten Abstandsgrenzwert entsprechendes Warnsignal umschaltet, wenn eine Zunahme des momentanen Abstands zum Hindernis gemessen wird.

9. Einparkhilfesystem nach einem der vorhergehenden Ansprüche, **dadurch gekennzeichnet, dass** die Messeinrichtung (1, 2, 3, 4, 7) angeordnet ist zum Messen des Abstands zu hinter dem Fahrzeug liegenden Hindernissen (6).

10. Einparkhilfesystem nach Anspruch 9, **dadurch gekennzeichnet, dass** die Messeinrichtung (1, 2, 3, 4, 7) eine Mehrzahl von Abstandssensoren (1, 2, 3, 4) umfasst, die in einem hinteren Stoßfänger (5) des Fahrzeugs angeordnet sind.

## Claims

1. Parking-aid system for a vehicle, having a measuring device (1, 2, 3, 4, 7) for measuring the instantaneous distance of the vehicle from an obstacle, an evaluation unit (8), which compares a distance signal (x) output by the measuring device (1, 2, 3, 4, 7) with a distance limit value (x_{A}, x_{B}, x_{C}), and a warning signal transmitter (9), which generates a warning signal perceptible to a driver of the vehicle as long as the distance signal (x) falls below the distance limit value, the evaluation unit (8) dynamically defining the distance limit value in accordance with a predetermined function of a movement state of the vehicle, **characterized in that** the alarm signal transmitter generates a further distinguishable form of the warning signal if a defined distance limit value is greater than the range of the measuring device (1, 2, 3, 4, 7).

2. Parking-aid system according to Claim 1, **characterized in that** the evaluation unit (8) compares the distance signal (x) with a plurality of distance limit values (x_{A}, x_{B}, x_{C}) and the warning signal transmitter (9) generates one from among a plurality of distinguishable forms of the warning signal, depending on what is the smallest distance limit value that is undershot.

3. Parking-aid system according to Claim 1 or 2, **characterized in that** the predetermined functions have values of less than 1.5 m if the speed of the vehicle is 0.

4. Parking-aid system according to one of the preceding claims, **characterized in that** the evaluation unit receives a signal (vₑ) representative of the inherent speed of the vehicle.

5. Parking-aid system according to one of the preceding claims, **characterized in that** the evaluation unit (8), in defining the distance limit values, adds to a speed-independent distance value a term that is linearly proportional to the speed.

6. Parking-aid system according to Claim 5, **characterized in that** the proportionality constant of the proportional term is a time that is not less than one of the following times that is not less than one of the following times or the sum of a plurality of these times:
a) the reaction time of the driver,
b) the reaction time of the measuring device,
c) the dead time of the brake system,
e) the time required for braking the vehicle to a standstill.

7. Parking-aid system according to Claim 6, **characterized in that** the proportionality constant is not greater than the sum of the times a to d enumerated in Claim 6.

8. Parking-aid system according to one of the preceding claims, **characterized in that** the evaluation unit (8) changes over the alarm signal transmitter (9) from a warning signal assigned to a first distance limit value to a warning signal corresponding to a higher second distance limit value only when an increase in the instantaneous distance from the obstacle is measured.

9. Parking-aid system according to one of the preceding claims, **characterized in that** the measuring device (1, 2, 3, 4, 7) is arranged for measuring the distance from obstacles (6) located behind the vehicle.

10. Parking-aid system according to Claim 9, **characterized in that** the measuring device (1, 2, 3, 4, 7) comprises a plurality of distance sensors (1, 2, 3, 4) arranged in a rear bumper (5) of the vehicle.

## Revendications

1. Système d'aide au parcage pour un véhicule, comprenant un dispositif de mesure (1, 2, 3, 4, 7) destiné à mesurer la distance instantanée du véhicule à un obstacle, une unité d'exploitation (8) qui compare un signal de distance (x) émis par le dispositif de mesure (1, 2, 3, 4, 7) à une valeur limite de distance (x_{A}, x_{B}, xc), et un émetteur de signaux d'alarme (9) qui produit un signal d'alarme pouvant être perçu par un conducteur du véhicule, aussi longtemps que le signal de distance (x) reste inférieur à la valeur limite de distance, l'unité d'exploitation (8) déterminant la valeur limite de distance dans un mode dynamique en appliquant une fonction prédéterminée d'un état de mouvement du véhicule,
**caractérisé en ce que**
l'émetteur de signaux d'alarme produit une autre forme distincte du signal d'alarme lorsqu'une valeur limite de distance fixée est supérieure à la portée du dispositif de mesure (1, 2, 3, 4, 7).

2. Système d'aide au parcage selon la revendication 1,
**caractérisé en ce que**
l'unité d'exploitation (8) compare le signal de distance (x) à une pluralité de valeurs limites de distance (x_{A}, x_{B}, x_{C}) et l'émetteur de signaux d'alarme (9) produit une de plusieurs formes distinctes du signal d'alarme qui correspond à la plus petite valeur limite de distance au-dessous de laquelle on est passé.

3. Système d'aide au parcage selon la revendication 1 ou 2,
**caractérisé en ce que**
les fonctions prédéterminées ont des valeurs inférieures à 1,5 m lorsque la vitesse du véhicule est nulle.

4. Système d'aide au parcage selon une des revendications précédentes,
**caractérisé en ce que**
l'unité d'exploitation reçoit un signal (vₑ) représentatif de la vitesse propre du véhicule.

5. Système d'aide au parcage selon une des revendications précédentes,
**caractérisé en ce que**
lors de la fixation des valeurs limites de distance, l'unité d'exploitation (8) ajoute à une valeur de distance indépendante de la vitesse un terme linéairement proportionnel à la vitesse.

6. Système d'aide au parcage selon la revendication 5,
**caractérisé en ce que**
la constante de proportionnalité du terme proportionnel est un temps qui n'est pas inférieur à un des temps suivants, ou à la somme de plusieurs de ces temps :
a) le temps de réaction du conducteur,
b) le temps de réaction du dispositif de mesure,
c) le temps mort du système de freinage,
d) le temps nécessaire pour freiner le véhicule jusqu'à l'arrêt.

7. Système d'aide au parcage selon la revendication 6,
**caractérisé en ce que**
la constante de proportionnalité n'est pas supérieure à la somme des temps a) à d) énumérés dans la revendication 6.

8. Système d'aide au parcage selon une des revendications précédentes,
**caractérisé en ce que**
l'unité d'exploitation (8) ne commute l'émetteur de signaux d'alarme (9) d'un signal d'alarme qui correspond à une première valeur limite de distance à un signal d'alarme qui correspond à une seconde valeur limite de distance, plus élevée, que si un accroissement de la distance instantanée à l'obstacle est détecté.

9. Système d'aide au parcage selon une des revendications précédentes,
**caractérisé en ce que**
le dispositif de mesure (1, 2, 3, 4, 7) est prévu pour mesurer la distance à des obstacles (6) situés derrière le véhicule.

10. Système d'aide au parcage selon la revendication 9,
**caractérisé en ce que**
le dispositif de mesure (1, 2, 3, 4, 7) comprend une pluralité de capteurs de distance (1, 2, 3, 4) qui sont disposés dans un pare-choc arrière (5) du véhicule.
